Europäisches Patentamt

European Patent Office

Office européen des brevets

(11) Numéro de publication: **0 252 839**
A2

(12) # DEMANDE DE BREVET EUROPEEN

(21) Numéro de dépôt: 87401595.1

(22) Date de dépôt: 07.07.87

(51) Int. Cl.⁴: **E 06 B 9/20**
E 06 B 9/12

(30) Priorité: 09.07.86 FR 8610019
30.06.87 FR 8709247

(43) Date de publication de la demande:
13.01.88 Bulletin 88/02

(84) Etats contractants désignés: CH DE LI NL

(71) Demandeur: Mac GREGOR-NAVIRE (F) S.A.
219-221 rue de Versailles
F-92410 Ville d'Avray (FR)

(72) Inventeur: Chretien, Michel Jean Emile
6 bis rue de l'Aérostation Maritime
F-78210 Saint Cyr l'Ecole (FR)

(74) Mandataire: Beauchamps, Georges et al
Cabinet Z.Weinstein 20, avenue de Friedland
F-75008 Paris (FR)

(54) **Dispositif de fermeture au moins partielle d'une baie verticale dans un bâtiment; son application comme obturateur mécanique antigel.**

(57) La présente invention a pour objet un dispositif de fermeture au moins partielle d'une baie verticale dans un bâtiment par un rideau continu transversalement rigide et longitudinalement flexible.

Selon l'invention, le rideau (1) est supporté de chaque côté par une chaîne porte-rideau (2) à galets (4, 4a) de roulement déplaçables dans un chemin de guidage latéral correspondant, fixée au bord du rideau et s'étendant sur au moins toute la longueur du rideau (1).

L'invention trouve notamment application comme obturateur mécanique antigel dans des centrales thermiques.

## Description

"Dispositif de fermeture au moins partielle d'une baie verticale dans un bâtiment ; son application comme obturateur mécanique antigel".

La présente invention a pour objet un dispositif de fermeture au moins partielle d'une baie verticale dans un bâtiment telle que par exemple une porte de hangar de grande dimension.

L'invention trouve notamment application pour l'obturation mécanique antigel, en particulier pour protéger l'intérieur de la zone de dispersion d'une tour de réfrigération atmosphérique pour une centrale nucléaire.

On connaît déjà des dispositifs de fermeture par un rideau continu transversalement rigide et longitudinalement flexible, tel que notamment un rideau unidirectionnellement ondulé, à guidage bilatéral par deux chemins de guidage latéraux comportant chacun une portion verticale pour translation rectiligne de fermeture au moins partielle et d'ouverture de baie, et à mouvement commandé. Dans ces dispositifs, le rideau est habituellement enroulé pour l'ouverture de la baie de passage, en une ou plusieurs spires sur un support d'entraînement tel qu'un cylindre ou un tambour.

Le but de la présente invention est d'obtenir un système d'une conception plus simple permettant notamment un rangement aisé du rideau et évitant toute déformation en position verticale de celui-ci par son propre poids ou sous l'effet d'une surcharge temporaire telle que de la glace.

La solution conforme à la présente invention pour parvenir à cet objectif consiste en un dispositif de fermeture au moins partielle d'une baie verticale dans un bâtiment par un rideau continu transversalement rigide et longitudinalement flexible, tel que notamment un rideau unidirectionnellement ondulé, à guidage bilatéral par deux chemins de guidage latéraux comportant chacun une portion verticale pour translation rectiligne de fermeture au moins partielle et d'ouverture de baie, et à mouvement commandé, les chemins de guidage comportant chacun une portion supérieure pour translation rectiligne de rangement, raccordée à la portion verticale par une portion intermédiaire arquée et caractérisé en ce que le rideau est supporté de chaque côté par une chaîne porte-rideau à galets de roulement déplaçables dans le chemin de guidage latéral correspondant, fixée au bord du rideau et s'étendant sur au moins toute la longueur du rideau.

Ainsi, dans ce nouveau système le rideau ne peut être déformé par son propre poids ou sous l'effet d'une surcharge, en position verticale de fermeture.

Selon une autre caractéristique de l'invention, chaque chaîne porte-rideau est associée à un organe de transmission souple d'entraînement sans fin tel que câble ou chaîne s'étendant horizontalement et extérieurement au rideau en passant sur deux poulies de renvoi extrêmes respectivement menante et menée et comportant de préférence un moyen de tension.

La présente invention a également pour objet l'application du dispositif de fermeture précédemment décrit pour l'obturation antigel pour protéger notamment l'intérieur de la zone de dispersion d'une tour de réfrigération atmosphérique d'une centrale nucléaire, où l'eau de réfrigération chaude est refroidie pour son recyclage par échange thermique avec l'air extérieur.

Cependant, lors des périodes hivernales, l'air froid extérieur provoque la formation de glace sur toute ou partie de la zone de dispersion et le mur de glace ainsi formé limite l'entrée de l'air nécessaire à l'échange thermique. Le dispositif conforme à l'invention permet d'une part d'éviter ou de limiter la formation de glace pendant la période froide où l'ouverture est au moins partiellement obturée tout en permettant l'échange thermique avec l'air extérieur, et d'autre part de revenir facilement à des conditions d'exploitation normales dès le retour à des températures positives.

De plus, en cours de manoeuvre du dispositif de l'invention pour l'ouverture ou la fermeture au moins partielle de la baie par le rideau, des efforts intempestifs peuvent survenir, occasionnés par exemple par un coincement des galets de la chaîne porte-rideau dans leur chemin de guidage correspondant ou par la formation de glace sur le rideau surchargeant celui-ci. De tels efforts risquent de détériorer voir même causer la rupture de certains éléments du dispositif tels que par exemple l'organe de transmission souple d'entraînement sans fin du rideau s'étendant horizontalement et extérieurement au rideau.

Par ailleurs, dans l'application du dispositif de fermeture ci-dessus décrit comme obturateur mécanique antigel destiné à protéger notamment l'intérieur de la zone de dispersion d'une tour de réfrigération atmosphérique pour une centrale nucléaire, des positions d'arrêt intermédiaires du rideau sont prévues pour moduler l'entrée d'air en fonction de la température extérieure. A chacune de ces positions d'arrêt, le poids du rideau est directement supporté par les chaînes porte-rideau et donc par les organes d'entraînement. Or, des formations de glace peuvent surcharger inconsidérémment le rideau.

Il est donc nécessaire de protéger les organes d'entraînement ou de transmission de telles surcharges et ce indépendamment de la protection ci-dessus décrite en cours de manoeuvre.

La présente invention a donc également pour but d'éliminer les inconvénients ci-dessus en proposant un dispositif de fermeture au moins partielle d'une baie verticale dans un bâtiment par un rideau continu transversalement rigide et longitudinalement flexible et caractérisé en ce que le moyen de commande est un moto-réducteur irréversible monté flottant et en ce qu'il comprend un limiteur d'effort composé associé au moto-réducteur et comprenant un transducteur dynamométrique adapté pour arrêter le moto-réducteur lorsqu'un effort s'opposant au mouvement commandé atteint une valeur de seuil prédéterminée définie par le transducteur.

Selon une autre caractéristique de l'invention, le rideau étant positionné en une position fixe de fermeture partielle sélectivement variable, le limiteur d'effort composé précité comprend de plus un axe dynamométrique relié au transducteur dynamométrique et commandant le moto-réducteur de façon à descendre le rideau vers sa position de fermeture complète de la baie lorsqu'une surcharge appliquée au rideau à la position fixe de fermeture partielle dépasse une valeur de seuil prédéterminée définie par l'axe dynamométrique et inférieure à la valeur de seuil prédéterminée définie par le transducteur dynamométrique.

L'invention sera mieux comprise et d'autres buts, caractéristiques et avantages de celle-ci apparaîtront plus clairement à la lecture de la description explicative qui va suivre, faite en référence aux dessins schématiques annexés données uniquement à titre d'exemple non limitatif et illustrant un mode de réalisation actuellement préféré de l'invention, et dans lesquels :

La figure 1 est une vue de principe en perspective du dispositif de fermeture conforme à la présente invention ;

La figure 2 est une vue en coupe illustrant l'application du dispositif de fermeture selon l'invention pour l'obturation mécanique antigel pour protéger l'intérieur de la zone de ruissellement d'une tour de réfrigération atmosphérique pour une centrale nucléaire ;

La figure 3 est une vue de détail suivant la flèche III de la figure 1 ;

La figure 4 est une vue en coupe suivant la ligne IV-IV de la figure 3 ;

La figure 5 est une vue en détail suivant la flèche V de la figure 1 illustrant l'entraînement de la chaîne porte-rideau conforme à l'invention ;

La figure 6 est une vue en coupe suivant la ligne VI-VI ;

Les figures 7 et 8 sont des vues de détail suivant les flèches VII et VIII de la figure 1, du rideau utilisé dans le dispositif conforme à l'invention ;

La figure 9 est une vue suivant la flèche IX de la figure 1 ; et

La figure 10 est une vue en coupe agrandie suivant la ligne X-X de la figure 9.

D'une façon générale, la dispositif de fermeture selon l'invention comprend un rideau 1 à guidage bilatéral et à mouvement commandé.

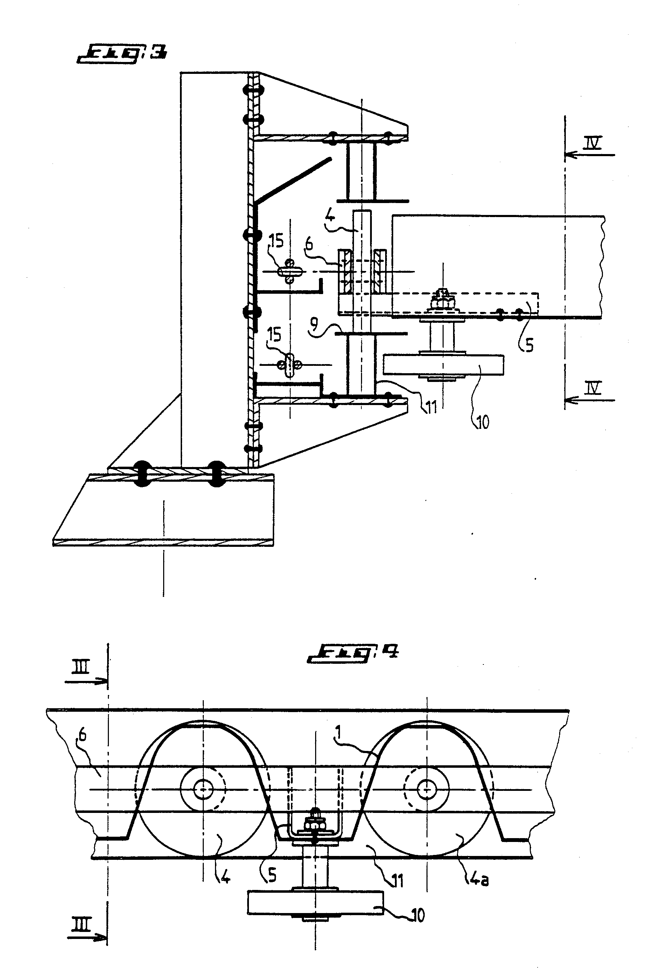

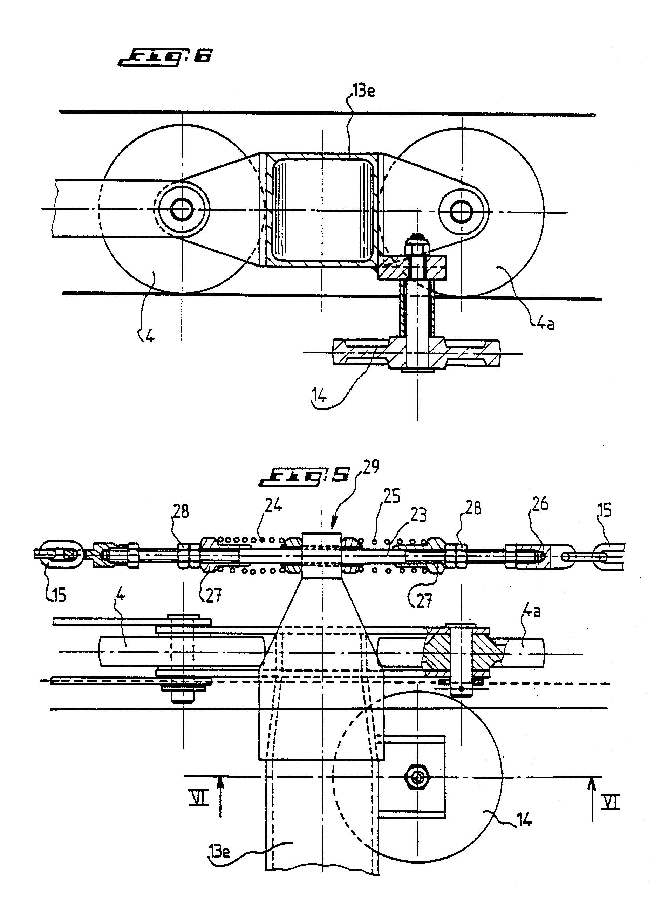

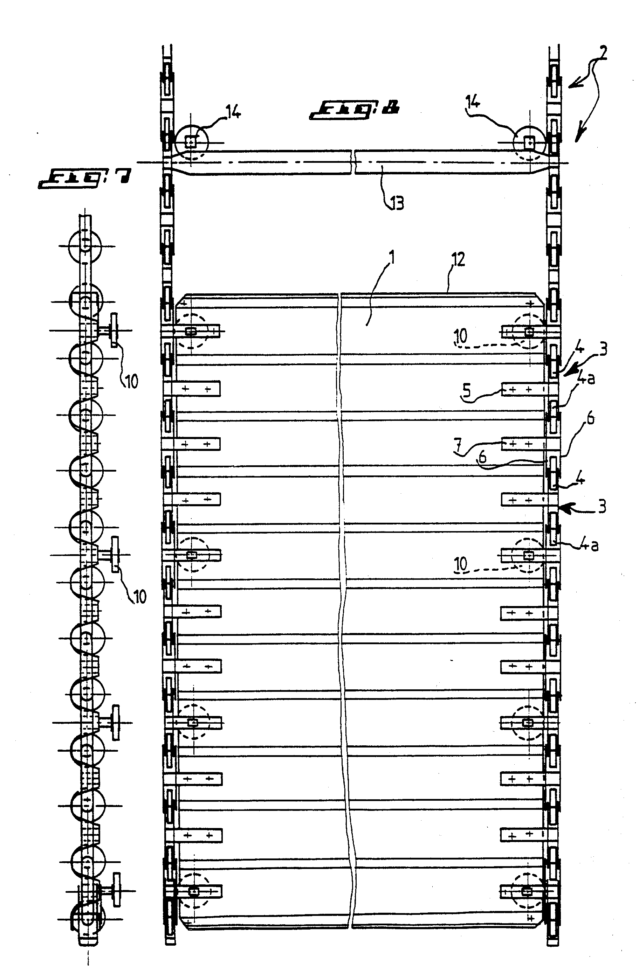

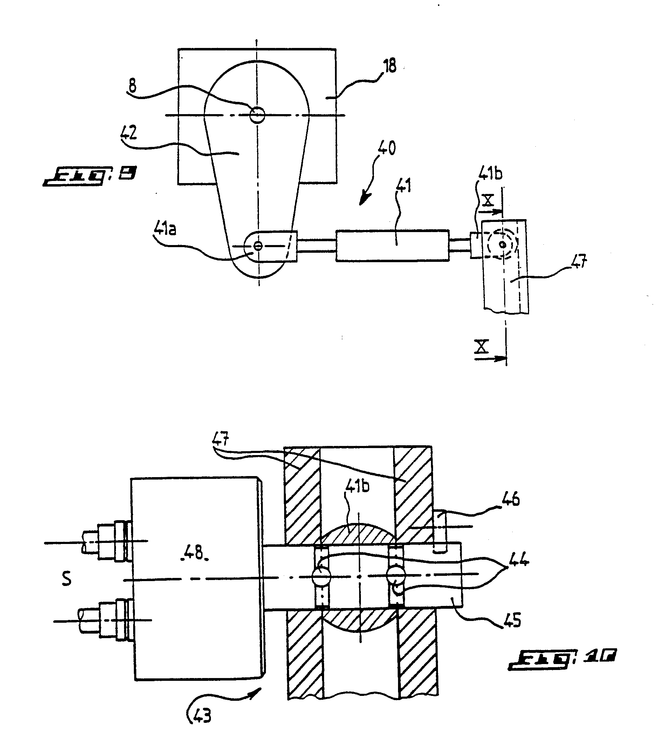

Le rideau 1 est réalisé de préférence sous forme d'une nappe métallique (par exemple en alliage d'aluminium) ondulée à ondes ou nervures de section transversale sensiblement trapézoïdale (figures 4 et 7).

Cette nappe allie une grande rigidité transversale, permettant en particulier de résister aux surcharges dues au vent sur des portées importantes, à une élasticité longitudinale permettant de conserver un fonctionnement aisé dans des passages en courbe de rayon réduit.

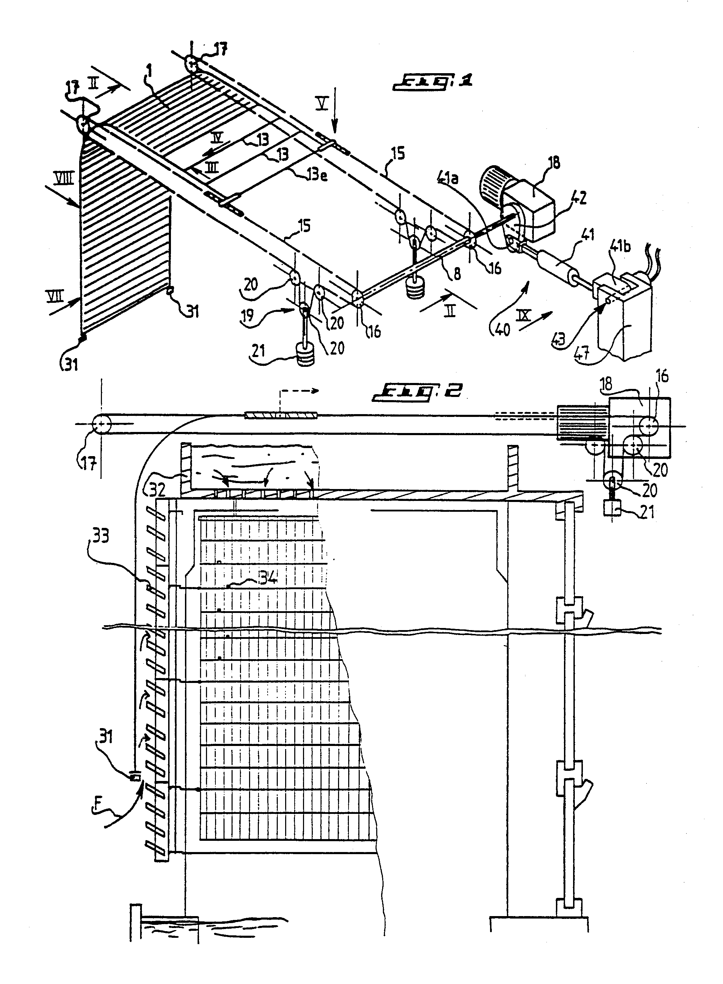

Le rideau 1 est supporté de chaque côté par une chaîne porte-rideau 2 composée de chariots 3 à deux galets 4, 4a successifs formant maillons fixés respectivement au rideau 1 par l'intermédiaire d'éléments de fixation rigides tels que des plaques transversales 5, par exemple en U, soudées au rideau 1 (figures 3, 4 et 8). Les chariots 3 de chaque chaîne sont relié les uns aux autres par deux maillons intermédiaires de liaison 6 sur lesquels sont fixés d'autres éléments transversaux 7 de fixation au rideau 1.

Les galets de roulement 4, 4a de chaque chaîne sont déplaçables dans un chemin de guidage latéral 9 correspondant, extérieur au rideau 1.

Le rideau 1 est de plus guidé latéralement par des galets ou patins de guidage transversal 10 coopérant avec des chemins latéraux conjugués de guidage transversal 11.

Comme le montre la figure 3, les galets 10 sont fixés, par exemple par vissage, en sous-face au rideau 1 et aux chaînes 2 par l'intermédiaire des éléments de fixation 5 et 7.

Avantageusement, les chemins de guidage latéral 9 et transversal 11 sont fixés entre eux et réalisés sous forme d'un profilé approprié par exemple de section transversale en T (figure 3).

Chaque chaîne porte-rideau 2 se prolonge au-delà de l'extérmité supérieur 12 du rideau 1. Les deux chaînes sont solidarisées entre elles dans leur prolongement par au moins une traverse entretoise 13 dont la traverse entretoise extrême 13e est bilatéralement reliée respectivement à ses extrémités opposées au système d'entraînement du rideau (Figure 1, 5 et 6).

Chaque traverse entretoise relie deux chariots correspondants des deux chaînes 2 et porte de préférence un galet ou patin de guidage transversal 14 au voisinage de ses extrémités (figure 8).

A chaque chaîne porte-rideau 2 est associé un organe de transmission souple d'entraînement sans fin tel que câble ou chaîne 15, s'étendant horizontalement et extérieurement au rideau 1. Comme le montre la figure 1, chaque chaîne d'entraînement 15 passe sur deux poulies de renvoi extrêmes respectivement menante 16 et menée 17. Les poulies menantes 16 sont reliées entre elles par un axe transversal 8 entraîné en rotation par un moyen de commande approprié tel qu'un moto-réducteur irréversible 18, par exemple du type à vis sans fin, monté flottant, c'est-à-dire supporté directement sur l'abre transversal 8.

Chaque chaîne d'entraînement 15 comporte de préférence un moyen de tension 19 constitué par un ensemble de trois poulies 20 disposées en triangle dont la plus basse est solidaire d'un contrepoids 21.

Chaque chaîne porte-rideau 2 est reliée à une chaîne d'entraînement 15 correspondante, au niveau de la traverse extrême menante 13e (figures 1, 5 et 6). Avantageusement, la traverse entretoise 13e est reliée par ses deux extrémités à chaque chaîne d'entraînement 15 par une liaison élastique bilatérale en direction de l'effort de traction d'entraînement.

Cette liaison élastique bilatérale comprend une tige 23 tranversant de façon librement coulissante l'extrémité de la traverse entretoise menante 13e et comporte une paire de ressorts antagonistes 24, 25 situés respectivement de part et d'autre de ladite extrémité de traverse en prenant respectivement appui contre celle-ci sous précontrainte de compression. La tige 23 est intercalée dans l'organe de transmission d'entraînement 15 dont elle fait partie intégrante.

Comme le montre la figure 5, la tige 23 comporte une portion centrale non filetée se prolongeant de chaque côté par une partie filetée pour sa fixation à la chaîne 15 par l'intermédiaire d'une douille filetée à tenon 26 qui se fixe sure l'extrémité de la tige plus ou moins profondément. Les ressorts 24 et 25 sont précontraints de façon réglable au moyen de manchons filetés 27 formant butées, bloqués par contre-écrou 28.

Le fonctionnement du dispositif de fermeture selon l'invention se déduit aisément de la structure qui vient d'être décrite.

Les chaînes de transmission d'entraînement 15, entraînées en rotation au moyen du moteur 18 entraînent par l'intermédiaire de la traverse entretoise extrême 13e le rideau 1, en position de fermeture ou d'ouverture de la baie suivant le sens de rotation du moteur.

Le rideau 1 est guidé bilatéralement par les deux chemins de guidage latéraux 9 et transversaux 11 en suivant un chemin comportant une portion verticale pour translation rectiligne de fermeture au moins partielle et d'ouverture de la baie, une portion supérieure pour translation rectiligne de rangement du rideau 1, raccordée à ladite portion verticale par une portion intermédiaire arquée.

La portion verticale de chaque chemin de guidage latéral se termine par une butée 31.

En référence à la figure 5, on décrira maintenant le fonctionnement de la liaison élastique bilatérale 29. En début de course de fermeture, le ressort 25 est comprimé progressivement contre les extrémités de la traverse extrême 13e, permettant ainsi un démarrage progressif et amorti du rideau 1.

Lorsque le rideau descend dans la partie verticale, il devient progressivement menant, sous l'effet de son propre poids, et le ressort 25 se détend progressivement tandis que le ressort 24 est à son tour comprimé en amortissant le passage entre phases menée et menante du rideau.

Lorsque le rideau 1 est en fin de course et touche la butée 31, les maillons de la chaîne 2 se positionnent légèrement en zig-zag en raison du jeu laissé entre galets et chemins de roulement. Lorsque l'ensemble du rideau est en position finale fermée, la chaîne 15 continue son déplacement, en décomprimant le ressort 24, et le déplacement est stoppé lorsque la position d'équilibre des ressorts 24 et 25 est réalisée. On supprime ainsi tout effort dans la chaîne de commande 15 dû au propre poids du rideau et éventuellement au poids additionnel (tel que par exemple la glace venant s'accumuler sur le rideau) en tassant davantage la mise en zig-zag des maillons de la chaîne 2.

Le processus inverse est réalisé lors de la manoeuvre d'ouverture.

En fin d'ouverture, lorsque la chaîne 15 s'arrête, le mouvement du rideau 1 se stoppe lui-même quand l'équilibre est établi entre la compression du ressort 24 et l'effort nécessaire au déplacement du rideau.

La chaîne 15 ne supporte plus alors que cet effort.

On a représenté à la figure 2 une application du dispositif de fermeture précédement décrit, comme obturateur mécanique antigel destiné à protéger notamment l'intérieur de la zone de dispersion d'une tour de réfrigération atmosphérique pour une centrale nucléaire.

D'une façon connue en soi, cette tour est entourée à la base d'une couronne cylindrique portant un bassin à l'air libre 32 dans lequel arrive l'eau de refroidissement à une température d'environ 38°C. A l'intérieur de cette couronne se trouve une structure de dispersion formée de lattes horizontales 34 en plastique accrochées à des treillis verticaux en acier inoxydable suspendus au bassin supérieur 32. L'eau chaude tombe en gouttes dans cette zone de dispersion grâce à des gicleurs prévus dans le fond du bassin. Un courant d'air frais (F) venant de l'extérieur de la tour croise la trajectoire de l'eau qui tombe au travers du dispositif de dispersion assurant ainsi un échange thermique. L'écoulement aérodynamique de l'air est facilité par des persiennes fixes 33 disposées en périphérique de la tour. Après dispersion, l'eau refroidie à 28°C est recyclée.

Le dispositif de fermeture selon l'invention est disposé extérieurement à la tour de réfrigération, et empêche l'air froid de passer directement à l'intérieur de la tour. Il se forme ainsi très peu de gel et le fonctionnement de la tour reste normal même lorsque l'air extérieur est très froid. La rentabilité de réfrigération est ainsi sensiblement accrue d'autant plue que le dispositif selon l'invention permet d'accélérer le dégel éventuel à l'intérieur de la tour.

De plus, la conception du dispositif de fermeture permet de moduler la surface obturée en fonction des variations de température et des vents dominants.

L'utilisation d'un rideau en un seul élément continu sans aucune articulation est très avantageuse car elle supprime les défauts éventuels reconnus aux joints tels que mauvaise étanchéité, corrosion, prise en glace ou grippage.

L'invention comprend de plus comme représenté aux figures 1, 9 et 10 un dispositif limiteur d'effort composé 40 disposé en sortie du moto-réducteur 18 et comprenant un transducteur dynamométrique 41, tel que par exemple le transducteur connu sous la dénomination DYNASTAT (marque déposée), et ayant l'une de ses extrémités en forme de chape (41a) reliée de façon articulée à l'extrémité inférieure d'un bras de réaction 42 traversé par l'arbre transversal 8 et solidaire du bâti du moto-réducteur 18 à l'aide de moyens appropriés (non représentés), tels que par exemple des vis de fixation.

Le dispositif limiteur 40 comprend de plus un dispositif formant axe dynamométrique 43 monté sur l'extrémité formant chape 41b du transducteur 41 opposée à celle reliée au bras de réaction 42. Comme cela est déjà connu en soi, le dispositif formant axe dynamométrique 43 comprend des jauges extensométriques 44 mesurant les contraintes de cisaillement dans l'axe dynamométrique prorement dit 45. L'axe 45 est bloqué en rotation par une plaquette d'arrêt 46 solidaire d'un support fixe 47 extérieur au système. L'axe 45 est monté à l'intérieur du support fixe 47 comme cela ressort de la figure 3. Le dispositif formant axe dynamométrique 43 comporte également un circuit électronique, connu en soi, portant la référence 48 et associé à l'arbre 45 pour produire à la sortie S un signal électrique représentatif du dépassement d'une valeur de surcharge limite, comme il sera décrit ultérieurement.

Le moto-réducteur 18 commande par l'intermédiaire du système d'entraînement le mouvement du rideau 1 par exemple de sa position de fermeture de la baie, comme représenté en figure 1, à sa position horizontale de rangement. Du fait du montage flottant du moto-réducteur 18, un effort de réaction à l'effort fourni par le moto-réducteur 18 pour déplacer le rideau 1 est appliqué au bras de réaction 42. Cet effort de réaction est transmis au transducteur dynamométrique dans lequel sont disposés des rupteurs électriques destinés à arrêter le moto-réducteur 18 lorsque l'effort de réaction, qui est un effort de traction ou de compression suivant le sens de déplacement du rideau 1, atteint une valeur de seuil prédéteminée. Ainsi, en cours de manoeuvre du rideau 1, si des efforts intempestifs surviennent, dûs par exemple à un coincement ou bloquage des galets de la chaîne porte-rideau dans le chemin de guidage correspondant, cette manoeuvre est stoppée par l'arrêt du moto-réducteur 18 lorsque ces efforts intempestifs atteignent la valeur de seuil définie par le transducteur dynamométrique 41.

Afin de moduler l'entrée d'air en fonction de la température extérieure, le rideau 1 est arrêté à une position fixe intermédiaire de fermeture partielle sélectivement réglable, la sélection des positions intermédiaires pouvant par exemple s'effectuer par comptage du nombre de tours de l'arbre 8 à l'aide d'un dispositif optique ou mécanique. A chacune de ces positions intermédiaires, le poids du rideau est directement supporté par les chaînes porte-rideau et donc par le système de transmission. Or, durant les périodes hivernales, des formations de glaces peuvent surcharger inconsidérémment le rideau 1 à la position fixe intermédiaire, cette surcharge pouvant causer la rupture du système de transmission. Le dispositif formant axe dynamométrique 43 est adapté pour recevoir par l'intermédiaire du bras de réaction 42 l'effort appliqué au système de transmission 15 par les poids du rideau 1 et de la glace formée sur celui-ci. Lorsque la surcharge atteint une valeur de seuil prédéterminée définie par le dispositif formant axe dynamométrique 43, ce dernier produit un signal électrique de commande du moto-réducteur 18 de façon à descendre le rideau vers la position de fermeture complète de la baie, position à laquelle le rideau est en appui sur les butées inférieures 31. A titre d'exemple, la descente du rideau 1 s'effectue lorsque la charge de glace sur le rideau 1 atteint 1186 daN. Bien entendu, le circuit électronique 48 du dispositif formant axe dynamométrique est taré en usine à une valeur correspondant par exemple à 1186 daN de glace.

Il est à noter que l'on prévoit un circuit logique destiné à neutraliser l'action de l'axe dynamométrique en cours de manoeuvre du rideau 1 afin d'éviter les problèmes d'interférence de fonctionnement du transducteur 41 et de l'axe dynamométrique 43.

La conception d'un tel circuit est évidente pour un homme du métier et n'a pas à être décrite en détail.

## Revendications

1. Dispositif de fermeture au moins partielle d'une baie verticale dans un bâtiment par un rideau continu transversalement rigide et longitudinalement flexible, tel que notamment un rideau unidirectionnellement ondulé, à guidage bilatéral par deux chemins de guidage latéraux comportant chacun une portion verticale pour translation rectiligne de fermeture au moins partielle et d'ouverture de baie, et à mouvement commandé par un moyen de commande, les chemins de guidage comportant chacun une portion supérieure pour translation rectiligne de rangement, raccordée à la portion verticale par une portion intermédiaire arquée, caractérisé en ce que le rideau (1) est supporté de chaque côté par une chaîne porte-rideau (2) à galets (4, 4a) de roulement déplaçables dans le chemin de guidage latéral (9) correspondant, fixée au bord du rideau et s'étendant sur au moins toute la longueur du rideau.

2. Dispositif selon la revendication 1, caractérisé par des galets ou patins de guidage (10, 14) transversal du rideau coopérant avec des chemins latéraux (11) conjugués de guidage transversal dont au moins certains sont fixés aux chaînes porte-rideau (2) précitées.

3. Dispositif selon la revendication 1 ou 2, caractérisé en ce que chaque chaîne porte-rideau (2) se prolonge au-delà de l'extrémité supérieure (12) du rideau (1), les deux chaînes (2) étant solidarisées entre elles dans leur prolongment, par au moins une tranvers entretoise (13) dont la traverse entretoise extrême (13e) est bilatéralement reliée respectivement à ses extrémités opposées au système d'entraînement du rideau, chaque traverse entretoise (13) portant de préférence un galet ou patin de guidage (14) transversal au voisinage de ses extrémités.

4. Dispositif selon la revendication 1, 2 ou 3, caractérisé en ce que à chaque chaîne porte-rideau (2) précitée est associé un organe de transmission souple d'entraînement sans fin tel que câble ou chaîne (15), s'étendant horizontalement et extérieurement au rideau (1) en passant sur deux poulies de renvoi extrêmes respectivement menante (16) et menée (17) et comportant de préférence un moyen de tension (19).

5. Dispositif selon la revendication 3 ou 4, caractérisé en ce que la chaîne porte-rideau (2) précitée est constituée d'un ensemble de charlots (3) à deux galets successifs (4, 4a) formant maillons fixés respectivement au rideau et reliés les uns aux autres par au moins un maillon intermédiaire (6) de liaison, chaque traverse entretoise (13) précitée reliant deux chariots correspondant des deux chaînes porte-rideau précitées.

6. Dispositif selon la revendication 4 ou 5, caractérisé en ce que la traverse extrême menante (13e) précitée est reliée à chaque organe de transmission d'entraînement (15) par une liaison élastique bilatérale (29) en direction de l'effort de traction d'entraînement.

7. Dispositif selon la revendication 6, caractérisé en ce que la liaison élastique bilatérale (29) précitée comprend une tige (23) traversant de façon librement coulissante l'extrémité de la traverse entretoise menante (13e) et comportant une paire de ressorts antagonistes (24, 25) situés respectivement de part et d'autre de ladite extrémité de traverse entretoise en prenant respectivement appui contre celle-ci sous précontrainte de compression, cette tige (23) étant intercalée dans l'organe de transmission d'entraînement (15) dont elle fait partie intégrante.

8. Dispositif selon la revendication 1, caractérisé en ce que le moyen de commande (18) est un moto-réducteur irréversible monté flottant et en ce qu'il comprend un limiteur d'effort composé (40) associé au moto-réducteur et comprenant un transducteur dynamométrique (41) adapté pour arrêter le moto-réducteur (18) lorsqu'un effort s'opposant au mouvement commandé atteint une valeur de seuil prédéterminée définie par le transducteur (41).

9. Dispositif selon la revendication 8, caractérisé en ce que le rideau (1) précité est positionné en une position fixe de fermeture partielle sélectivement variable et en ce que le limiteur d'effort composé (40) précité comprend de plus un axe dynamométrique (45) relié au transducteur (41) précité et commandant le moto-réducteur (18) de façon à descendre le rideau (1) vers sa position de fermeture complète de la baie lorsqu'une surcharge appliquée au rideau (1) à la position fixe de fermeture partielle dépasse une valeur de seuil prédéterminée définie par l'axe dynamométrique et inférieure à la valeur de seuil prédéterminée définie par le transducteur (41).

10. Dispositif selon la revendication 8, caractérisé en ce que le transducteur dynamométrique (41) précité est situé en sortie du moto-réducteur (18) et est relié de façon articulée à l'une de ses extrémités à un bras de réaction (42) solidaire du bâti du moto-réducteur (18) dont l'arbre moteur (8) traverse ledit bras et en ce que l'axe dynamométrique (45) est relié de façon articulée à l'autre extrémité opposée du transducteur (41).

11. Dispositif selon la revendication 10, caractérisé en ce que le transducteur dynamométrique (41) précité est du type DYNASTAT (marque déposée).

12. Application du dispositif selon l'une des revendications 1 à 11 comme obturateur mécanique antigel protégeant notamment l'intérieur de la zone de dispersion d'une tour de réfrigération atmosphérique pour une centrale.

0252839

FIG.1

FIG.2

Fig. 3

Fig. 4

0252839

**Fig.6**

**Fig.5**

0252839

Fig 8

Fig 7

0252839

FIG. 9

FIG. 10